# EUROPEAN PATENT APPLICATION

(11) **EP 4 414 509 A1**
(43) Date of publication of application: **14.08.2024**
(21) Application number: 23756234.3
(22) Date of filing: 07.02.2023
(51) Int. Cl.: E02F 9/26

(54) **DISPLAY CONTROL DEVICE AND REMOTE OPERATION DEVICE**

(30) Priority: 18.02.2022 JP 2022023764
(71) Applicant: Hitachi Construction Machinery Co., Ltd., Tokyo 110-0015 (JP)
(72) Inventor: NAKAMURA, Yusuke, Tokyo 100-8280 (JP); KAWAMURA, Ichirou, Tokyo 100-8280 (JP); OISHI, Moroe, Tokyo 100-8280 (JP); MURATA, Seiji, Tokyo 100-8280 (JP); IKEDA, Naohito, Tokyo 100-8280 (JP)
(74) Representative: Manitz Finsterwald Patent- und Rechtsanwaltspartnerschaft mbB
(86) International application number: PCT/JP2023/003896
(87) International publication number: WO 2023/157707

(57) **Abstract**

Provision of an appropriate graphical display during a series of operations of a work machine is made possible. This display control device comprises: a three-dimensional information acquisition section that acquires terrain information indicating a three-dimensional shape of a terrain of the area for work; a bucket position calculation section that acquires attitude information regarding an attitude of the work machine to calculate a position of the bucket in the area for work on the basis of the attitude information; and an AR image generation section that generates, on the basis of the terrain information and the position of the bucket, an AR image to be overlaid over the video of the area for work and displayed on the display. The AR image generation section generates, as the AR image, a first figure highlighting the position of at least a part of the bucket, and a second figure highlighting a part of a second region adjacent to a first region, the first region being a region that includes a portion in which the first figure is projected in a vertical direction or a front-rear direction of the area for work.

## Description

### Technical Field

The present invention relates to a display control device and a remote operation device.

### Background Art

For example, Patent Literature 1 proposes a display control device which, in a work machine control system in which a work machine can be remotely operated, causes a video of at least a part of the work machine (such as an excavator) to be displayed on a display, and also superimposes, on the video, a graphical display of, e.g., figures (AR images) that assist the operation of the work machine by the operator. Such graphical display helps in perceiving a sense of distance between the work machine and the ground, for example.

In the conventional display control device, when a video and a figure are displayed overlapping with each other, the video may be hidden by the figure, inadvertently interfering with the perception of the sense of distance. In addition, the work performed by a work machine may include not just an excavating operation but also a series of operations including a rotating operation and moving. However, the conventional display control device does not provide appropriate work assistance during such a series of operations.

### Citation List

### Patent Literature

Patent Literature 1: JP 2016-160741 A

### Summary of Invention

### Technical Problem

The present invention aims to provide a display control device and a remote operation device that make it possible to provide an appropriate graphical display for work assistance during a series of operations of a work machine.

### Solution to Problem

In order to solve the problem, a display control device according to the present invention acquires a video of an area for work of a work machine provided with a bucket and displays the video on a display, the display control device including: a three-dimensional information acquisition section that acquires terrain information indicating a three-dimensional shape of a terrain of the area for work; a bucket position calculation section that acquires attitude information regarding an attitude of the work machine to calculate a position of the bucket in the area for work on the basis of the attitude information; and an AR image generation section that generates an AR image to be overlaid over the video of the area for work and displayed on the display on the basis of the terrain information and the position of the bucket. The AR image generation section generates, as the AR image, a first figure highlighting the position of at least a part of the bucket, and a second figure highlighting a part of a second region adjacent to a first region, the first region being a region including a portion in which the first figure is projected in a vertical direction or a front-rear direction of the area for work.

### Advantageous Effects of Invention

According to the present invention, during a series of operations of a work machine, an appropriate graphical display for work assistance can be provided and the work efficiency of the work machine can be improved.

### Brief Description of Drawings

Fig. 1 is a schematic diagram illustrating a configuration of a display control device of a first embodiment and a work machine 100 as the object of application.
Fig. 2 is a schematic diagram illustrating a configuration of sensors S1 to S3 mounted on the work machine 100.
Fig. 3 is a schematic diagram illustrating an example of the details of a configuration of a remote operation section 300.
Fig. 4 is a block diagram illustrating an example of the details of a configuration of a video generation section 103 mounted on the work machine 100.
Fig. 5 is a block diagram illustrating the details of the configuration of the remote operation section 300 corresponding to the video generation section 103 of Fig. 4.
Fig. 6 is a block diagram illustrating another example of the details of the configuration of the video generation section 103 mounted on the work machine 100.
Fig. 7 is a block diagram illustrating the details of the configuration of the remote operation section 300 corresponding to the video generation section 103 of Fig. 6.
Fig. 8 is a flowchart illustrating a procedure for generating a superimposed image including an AR display in a case in which the video generation section 103 and the operation/display control device of Fig. 4 and Fig. 5 are adopted.
Fig. 9 illustrates an example of an AR image displayed in a superimposed image in the first embodiment.
Fig. 10 illustrates an example of an AR image displayed in a superimposed image in the first embodiment.
Fig. 11 illustrates an example of an AR image displayed in a superimposed image in the first embodiment.
Fig. 12 illustrates an example of an AR image displayed in a superimposed image in the first embodiment.
Fig. 13 illustrates an example of an AR image displayed in a superimposed image in the first embodiment.
Fig. 14 illustrates an example of an AR image displayed in a superimposed image in the first embodiment.
Fig. 15 illustrates an example of an AR image displayed in a superimposed image in the first embodiment.
Fig. 16 illustrates an example of an AR image displayed in a superimposed image in the first embodiment.
Fig. 17 is a block diagram illustrating an example of the details of a configuration of the video generation section 103 of a display control device according to a second embodiment.
Fig. 18 is a schematic diagram illustrating an operation of the second embodiment.
Fig. 19 is a schematic diagram illustrating the operation of the second embodiment.
Fig. 20 is a schematic diagram illustrating the operation of the second embodiment.
Fig. 21 is a flowchart illustrating a procedure for generating a superimposed image including an AR image in the second embodiment.
Fig. 22 is a block diagram illustrating an example of the details of a configuration of the video generation section 103 of the display control device according to a third embodiment.
Fig. 23 illustrates an example of an AR image displayed in a superimposed image in the display control device of the third embodiment.
Fig. 24 illustrates an example of an AR image displayed in the superimposed image in the display control device of the third embodiment.
Fig. 25 is a schematic diagram illustrating a variation.
Fig. 26 is a schematic diagram illustrating a variation.
Fig. 27 is a schematic diagram illustrating a variation.
Fig. 28 is a conceptual diagram for describing the switching of the display state of an AR image in the display control device of an embodiment.

### Description of Embodiments

In the following, embodiments will be described with reference to the attached drawings. In the attached drawings, functionally identical elements may be indicated by identical numerals. While the attached drawings show embodiments and implementation examples in accordance with the principles of the present disclosure, these are for the purpose of understanding the present disclosure and should not be used for interpreting the present disclosure in a limited sense. The descriptions herein are provided merely by way of examples, and are not intended to be limiting of the scope of the claims or application examples of the present disclosure in any sense.

While the embodiments are described in sufficient detail to enable a person skilled in the art to practice the present disclosure, it is to be understood that other implementations or modes are possible, and that changes in configuration or structure as well as substitution of various elements may be made without departing from the scope of the technical concepts and spirit of the present disclosure. Accordingly, the following description is not to be interpreted in a limited sense.

### [First embodiment]

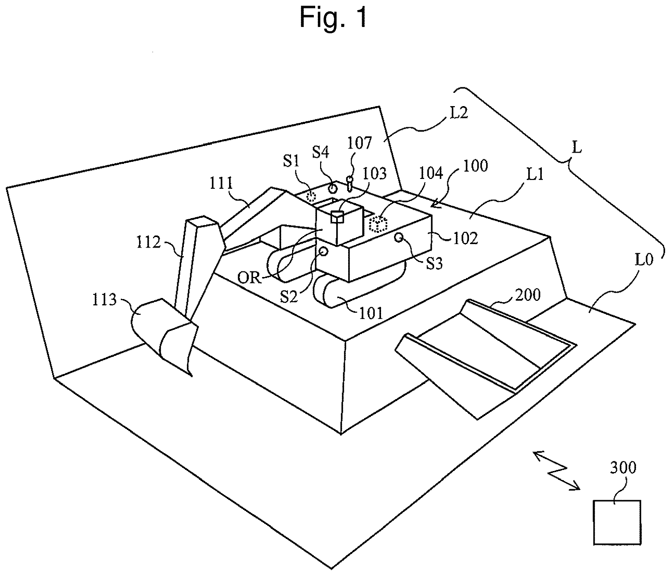

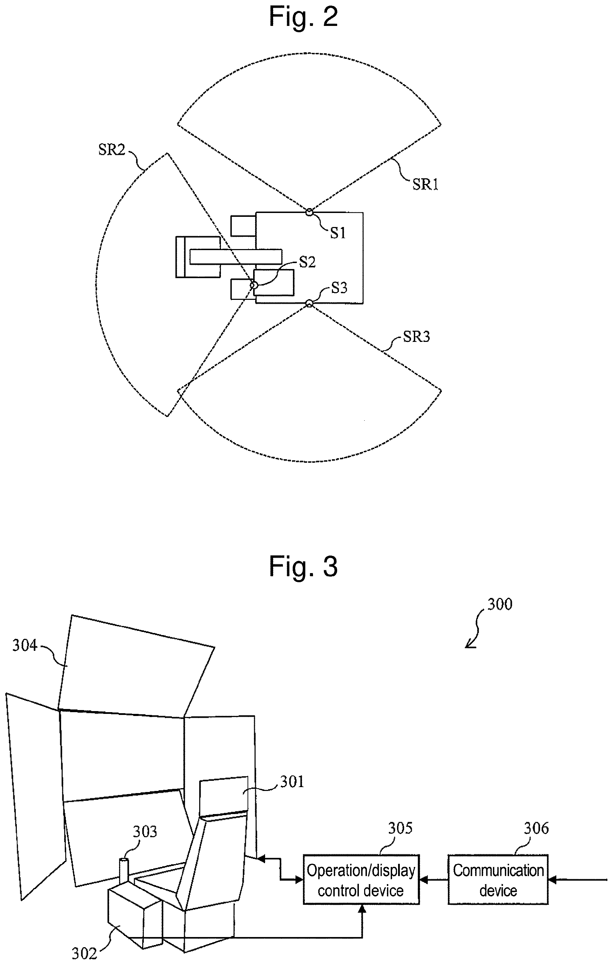

With reference to Fig. 1 and Fig. 2, the configurations of a display control device of a first embodiment and a work machine (construction machine) 100 in which the display control device is applied are described. The work machine 100 for example is a backhoe-type excavator in which a bucket 113 faces an operation room OR. The operation room OR is configured to be able to rotate with respect to a body section so that the bucket 113 can be moved to an area for work. Through the operation of the work machine 100, a ground L that is the area for work is excavated, forming a flat surface L0, a flat surface L1, and an inclined surface L2, for example. The earth excavated by the work machine 100 is discharged (dumped) into a vessel 200, such as a dump truck, by the work machine 100 rotating and moving the bucket 113 to the vessel 200.

The work machine 100 that is a backhoe-type excavator includes, for example: a lower travel body 101; an upper rotation body 102 supported and carried by the lower travel body 101; an operation room OR mounted on the upper rotation body 102; a video generation section 103; a communication device 104; various sensors S1 to S4; an antenna 107; a boom 111; an arm 112; and a bucket 113. The boom 111, the arm 112, and the bucket 113 are driven by an engine, a hydraulic cylinder, and the like, which are not shown, to perform excavation on the ground L, which is the area for work.

The lower travel body 101 is driven by a drive section, not shown, so that the upper rotation body 102 can be moved forward, backward, left, and right. The upper rotation body 102 is configured to be able to rotate with respect to the lower travel body 101, and is driven by a drive section, not shown, to have the rotation direction and rotation angle thereof controlled. The work machine 100 is configured to be operable unattended and remotely controllable by a remote operation section 300. Thus, the operator need not be sitting in the operation room OR.

The video generation section 103 and the communication device 104 are mounted in the upper rotation body 102. The video generation section 103 uses the various sensors S1 to S4, which include imaging elements, to generate a video of the ground, i.e., the area for work, and the bucket 113. The video generation section 103 also generates an AR image that depicts, for example, the current position of the bucket 113 and the position of the ground to which the bucket 113 is about to move, and superimposes the AR image with a real video to generate a superimposed image. The communication device 104 is configured to transmit acquired video data to the remote operation section 300, and is configured to receive control information from the remote operation section 300.

The sensors S1 to S4 are disposed on the upper rotation body 102 to sense the situation around the work machine 100. As illustrated in Fig. 2, as an example, the sensor S2 may be composed of: an imaging device having a CMOS sensor or the like for imaging a field of view SR2 ahead of the work machine 100; or an object detection sensor, such as LiDAR or an ultrasonic sensor, for sensing the presence or absence of an object and the distance thereto. Similarly, the sensors S1, S3 sense fields of view SR1 and SR3 laterally of the work machine 100. The fields of view are not limited to the three directions. The position, angle, and/or the number of the sensors installed may be adjusted in accordance with the angle of view of the sensors so as to sense the entire circumference. The sensor S4 may be an attitude sensor for sensing the attitude of the work machine 100. The attitude sensor S4 may be composed of, for example, any of a gyro sensor, a tilt sensor, and an acceleration sensor, or a combination thereof. The imaging elements of the sensors S1 to S3 may be each configured as a stereo camera capable of stereoscopy, or a monocular camera. What is illustrated in Fig. 2 is exemplary, and is not limiting of the present disclosure.

With reference to Fig. 3, an example of the details of the configuration of the remote operation section 300 is described. The remote operation section 300, as an example, is provided with a driver's seat 301, an operation control section 302, an operating column 303, a display 304, an operation/display control device 305, and a communication device 306.

The driver's seat 301 is a chair on which the operator sits, with the operation control section 302 and the operating column 303 disposed to the side. Other than the operating column 303, various levers, switches, pedals and the like may be arranged, and their operations may be reflected on the operation of the work machine 100. As the operating column 303 and the like are operated, corresponding operation signals are generated in the operation control section 302 and are transmitted to the operation/display control device 305. In accordance with the received operation signals, the operation/display control device 305 generates control signals for driving the work machine 100, and transmits the control signals to the work machine 100 through the communication device 306. The operation/display control device 305 also functions as a display control device for performing display control of a superimposed image having an AR image on the display 304, as will be described below.

The display 304 is a display device that is disposed forwardly of the driver's seat 301 to display the bucket 113, the ground as the area for work, and an AR image which will be described later. The display 304, as illustrated in Fig. 3, may be configured including a plurality of display regions (display screens) having appropriate angles of depression such that a 3-dimensional space can be expressed realistically. The display 304 is not limited to such configuration and may be composed of a single display region, or may be a head-mounted display.

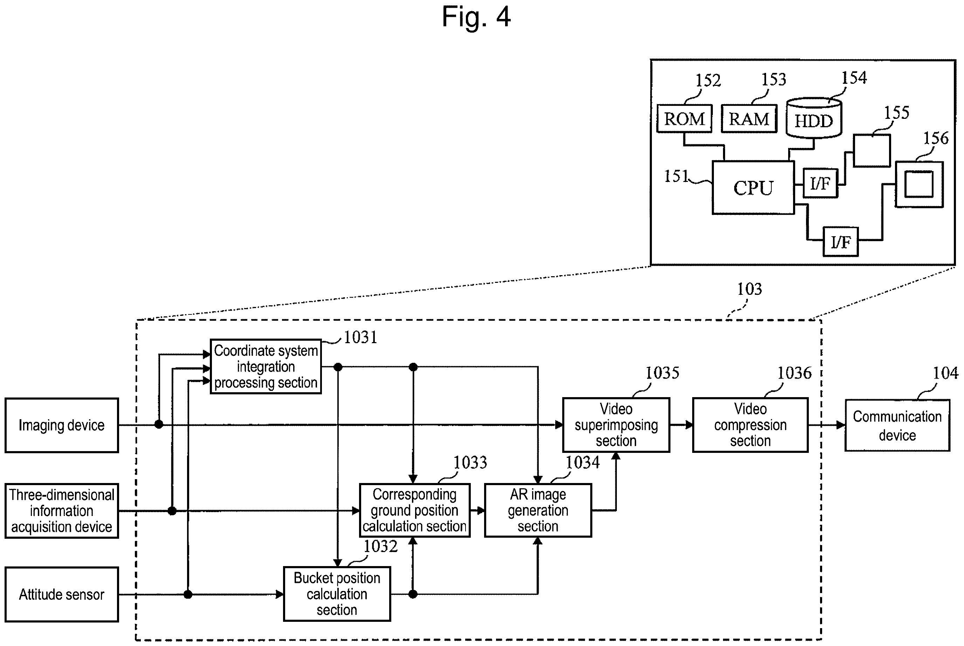

With reference to Fig. 4, an example of the details of the configuration of the video generation section 103 mounted on the work machine 100 is described. The video generation section 103 of Fig. 4 is provided with, as an example, a coordinate system integration processing section 1031, a bucket position calculation section 1032, a corresponding ground position calculation section 1033, an AR image generation section 1034 (assistance information generation section), a video superimposing section 1035, and a video compression section 1036. The video generation section 103 may be a general-purpose computer, and may be composed of, for example, a CPU 151 (processor), a ROM 152, a RAM 153, a hard disk drive 154, an input device 155, and a display 156 (display section). The CPU 151, which is a form of a processor, may be a GPU, a semiconductor device capable of performing other computation processing, or a combination thereof.

The coordinate system integration processing section 1031 performs a process (sensor fusion) in which the coordinate systems of detection signals obtained by the plurality of sensors S1 to S4 (for example, the sensors S1 to S3 include a three-dimensional information acquisition device, such as LiDAR, and an imaging device (such as a CMOS sensor), and the sensor S4 is an attitude sensor) are integrated into a single video signal. Specifically, in accordance with the result of the integration processing, correction information for the coordinate system of each sensor is computed, and the correction information is added or applied to the detection signal from each sensor. That is, the coordinate system integration processing section 1031 functions as a shape information acquisition section that acquires shape information indicating the three-dimensional shape of the ground as the area for work of the work machine 100.

The bucket position calculation section 1032 acquires information concerning the attitude of the work machine 100 (attitude information) from the attitude sensor S4, and calculates the position of the bucket 113 in the area for work on the basis of the attitude information. In the present embodiment, the bucket position calculation section 1032 calculates the position of the bucket 113 on the basis of data indicating the result of the integration processing that is output from the coordinate system integration processing section 1031, and the detection signal from the attitude sensor S4.

The corresponding ground position calculation section 1033 calculates the position of the ground (corresponding ground) the bucket 113 is about to excavate, on the basis of, e.g., the data indicating the result of the integration processing that is output from the coordinate system integration processing section 1031, calculated data from the bucket position calculation section 1032, and position information obtained from the sensors S1 to S3 as the three-dimensional information acquisition device. As used herein, the "corresponding ground" indicates an area that the bucket 113 is expected to actually contact and excavate. It is also possible to define an area slightly larger than a ground area that is expected to be actually excavated as the corresponding ground, in consideration of errors during excavation. The computation of the corresponding ground position may be based on an average height of the corresponding ground of the shape information indicating the three-dimensional shape of the ground that is present vertically below the position of the bucket 113, for example.

From the obtained bucket position data and the position data of the corresponding ground, the AR image generation section 1034 generates an AR image indicating these positions. The AR image is a highlight image of a part of an actual video of, e.g., the work machine 100 or the object of work (such as the ground), the highlight image being displayed superimposed over the video to assist the work by the work machine 100. The video superimposing section 1035 generates a superimposed image in which the video data obtained by the sensors (imaging device) S1 to 3 is superimposed with the AR image. The video compression section 1036 compresses the superimposed image generated according to a predetermined image compression technique, and outputs the compressed image to the communication device 104. The image compression technique may involve but is not limited to known techniques, such as MPEG, H.264, and Motion JPEG.

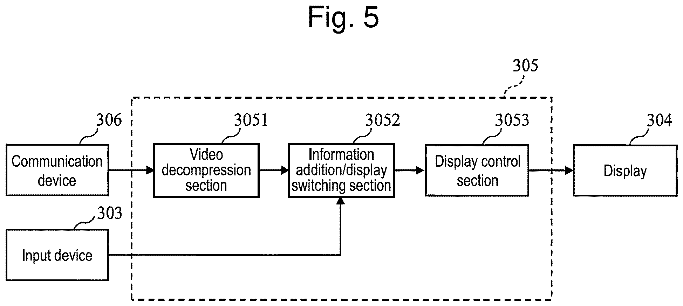

With reference to Fig. 5, the details of the configuration of the remote operation section 300 are described. Due to the communication device 104 in the work machine 100, the above-described superimposed image data in image-compressed state is received by the communication device 306 in the remote operation section 300 through wireless communication via a wireless base station, not shown, and is received by the operation/display control device 305. As illustrated in Fig. 5, the operation/display control device 305, as a configuration for performing display control of the superimposed image having the AR image, is provided with a video decompression section 3051, an information addition/display switching section 3052, and a display control section 3053. The operation/display control device 305 also has the function of transmitting the control signals from the operation control section 302 from the communication device 306 to thereby control the various operations of the work machine 100, the details of which are omitted. The operation/display control device 305 may be implemented by a general-purpose computer including a CPU or a GPU, various memories, and the like, and a computer program for performing the various operations indicated below.

The compressed superimposed image data received by the communication device 306 is initially input to the video decompression section 3051 and decompressed. The superimposed image data after decompression is input to the information addition/display switching section 3052. The information addition/display switching section 3052 has the function of, for example, adding an additional AR image to the AR image currently being displayed, or switching to an AR image separate from the AR image currently being displayed superimposed, in accordance with an input from the input device (operating column) 303. By the information addition/display switching section 3052, an AR image that is displayed is added or changed in accordance with the state of the work machine 100 on the basis of an operation by the remote operation section 300. The display control section 3053 performs display control when the superimposed image thus generated is displayed on the display 304.

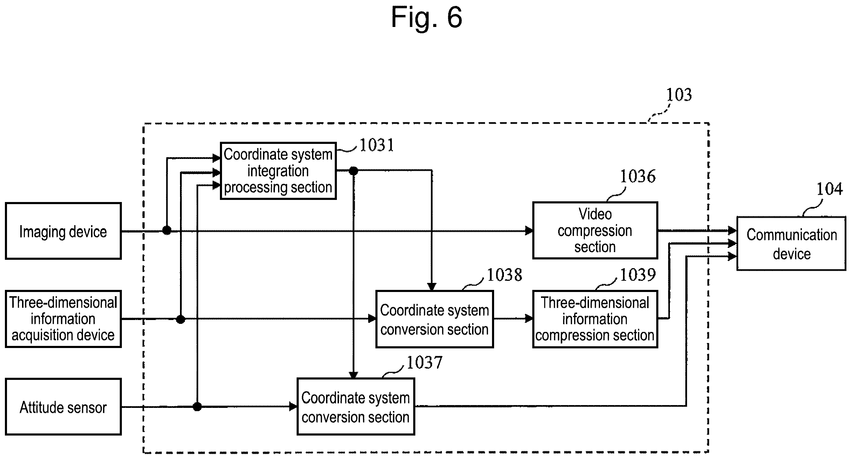

With reference to Fig. 6, another example of the details of the configuration of the video generation section 103 mounted on the work machine 100 is described. The video generation section 103 of this example is configured to transmit the video information acquired by the imaging device of S1 to S3 and the three-dimensional information acquired by the three-dimensional information acquisition device (such as LiDAR) separately to the remote operation section 300 via the communication device 104.

Specifically, the video generation section 103 of Fig. 6, as an example, is provided with coordinate system conversion sections 1037, 1038 and a three-dimensional information compression section 1039, in addition to the coordinate system integration processing section 1031, the bucket position calculation section 1032, and the video compression section 1036 similar to those of the first example of Fig. 4.

The coordinate system conversion section 1037 converts the coordinate system of the detection data of the attitude sensor S4 on the basis of the result of the integration processing that is output from the coordinate system integration processing section 1031, and outputs the detection data from the attitude sensor S4 after coordinate system conversion. Similarly, the coordinate system conversion section 1038 converts the coordinate system of the detection data from the sensors S1 to S3 as the three-dimensional information acquisition devices, on the basis of the result of the integration processing that is output from the coordinate system integration processing section 1031, and outputs the coordinate converted detection data of the sensors S1 to S3. The output data is compressed in the three-dimensional information compression section 1039 using a predetermined image compression technique.

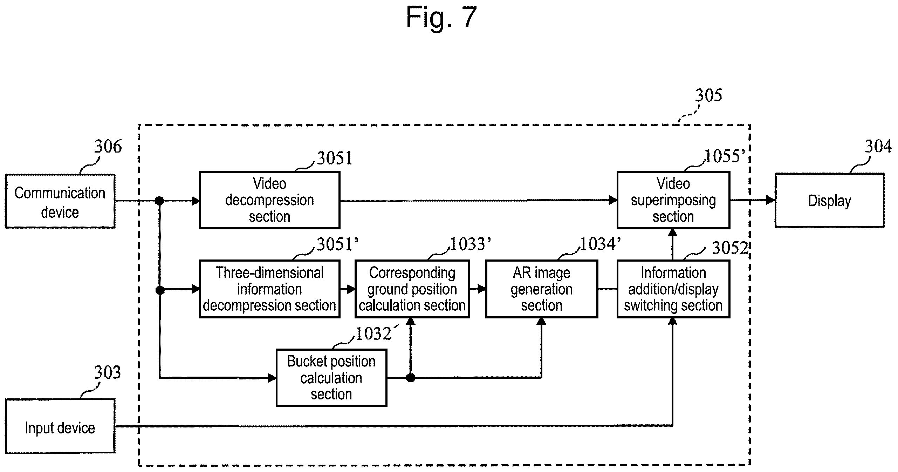

Thus, in the example of Fig. 6, a compressed video signal obtained on the basis of the sensors S1 to S3 (imaging device), compressed three-dimensional information obtained on the basis of the sensors S1 to S3 (three-dimensional information acquisition device), and the detection signal obtained from the attitude sensor S4 and after coordinate system conversion are separately transmitted to the remote operation section 300 illustrated in Fig. 7 via the communication device 104. In the remote operation section 300 illustrated in Fig. 7, the position of the bucket 113 and the position of the corresponding ground are calculated on the basis of these data.

With reference to Fig. 7, an example of the configuration of the remote operation section 300 including the operation/display control device 305 corresponding to the video generation section 103 of Fig. 6 is described. The operation/display control device 305 of Fig. 7 is provided with a three-dimensional information decompression section 3051', a bucket position calculation section 1032', a corresponding ground position calculation section 1033', and an AR image generation section 1034', in addition to the video decompression section 3051 and the information addition/display switching section 3052 similar to those of Fig. 5. The bucket position calculation section 1032', the corresponding ground position calculation section 1033', and the AR image generation section 1034' respectively have functions substantially similar to those of the bucket position calculation section 1032, the corresponding ground position calculation section 1033, and the AR image generation section 1034 illustrated in Fig. 4. However, they are different in that the former are provided in the operation/display control device 305, whereas the latter are provided in the video generation section 103.

The video decompression section 3051 has the function of decompressing the compressed video signal received via the communication device 104 and the communication device 306. On the other hand, the three-dimensional information decompression section 3051' has the function of decompressing the compressed three-dimensional information received via the communication devices 104, 306. The bucket position calculation section 1032' acquires bucket position data indicating the position of the bucket 113, in accordance with the decompressed three-dimensional information data and the detection signal of the attitude sensor S4. The decompressed three-dimensional information data and the detection signal of the attitude sensor S4 include data indicating the result of the integration processing by the coordinate system integration processing section 1031. Accordingly, the bucket position calculation section 1032' can calculate data indicating the position of the bucket 113 in the same way as in the case of Fig. 4. The corresponding ground position calculation section 1033' calculates the position of the ground (corresponding ground) the bucket 113 is about to excavate, on the basis of the calculated data from the bucket position calculation section 1032' and the decompressed three-dimensional information, for example.

In the case of the video generation section 103 and the operation/display control device 305 illustrated in Fig. 6 and Fig. 7, the agent of calculation of the position of the bucket 113 and the corresponding ground differs from that of Fig. 4 and Fig. 5. However, in each case, it is possible to perform accurate AR display on the basis of the video signal obtained by integrating the coordinate systems of the detection signals from the plurality of sensors S1 to S4.

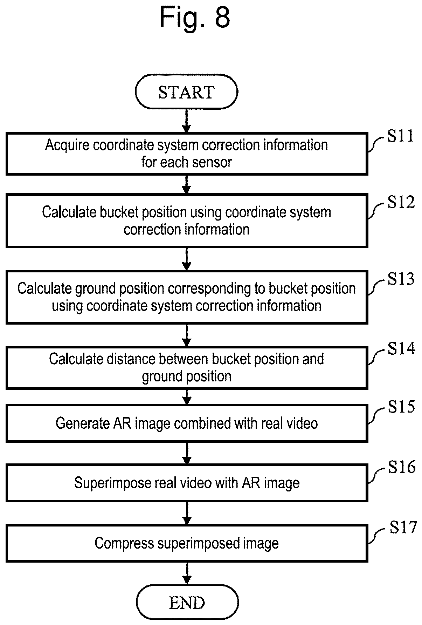

With reference to a flowchart of Fig. 8, a procedure for generating the superimposed image including an AR display in a case in which the video generation section 103 and the operation/display control device 305 of Fig. 4 and Fig. 5 are adopted is described. First, in step S11, after the detection data is obtained from the sensors S1 to S4, coordinate system correction information for correcting the coordinate system of the detection data from each of the sensors S1 to S4 is computed or acquired by integration processing in the coordinate system integration processing section 1031.

Then, in the following step S12, the coordinate system correction information and the detection data from the attitude sensor S4 are used to calculate information about the position of the bucket 113 in the bucket position calculation section 1032. Once the information about the position of the bucket 113 is calculated, in step S13, the position of the ground (corresponding ground) to which the bucket 113 is about to move is calculated on the basis of the information about the position of the bucket 113, the detection signals from the sensors S1 to S3 as the three-dimensional information acquisition device, and the coordinate system correction information as the result of the coordinate system integration processing.

Thereafter, in accordance with the results of the calculations in steps S12, S13, the distance between the bucket 113 and the position of the corresponding ground is calculated (step S14). In accordance with the results of the computations in S12 to S14, an AR image to be superimposed over a captured real video is generated in the AR image generation section 1034 (step S15). Once the AR image is generated, the AR image data is superimposed with the real video data captured by the sensors S1 to 3 (imaging device) in the video superimposing section 1035 to generate a superimposed image (step S16). The superimposed image is compressed in the video compression section 1036 (step S17), and is transmitted from the communication device 104 to the remote operation section 300. The procedure for generating the superimposed image including the AR display in the case in which the video generation section 103 and the operation/display control device 305 of Fig. 6 and Fig. 7 are adopted is also generally the same as described above, except for the different installed position of the information generating agent. Thus, the detailed description of the procedure is omitted.

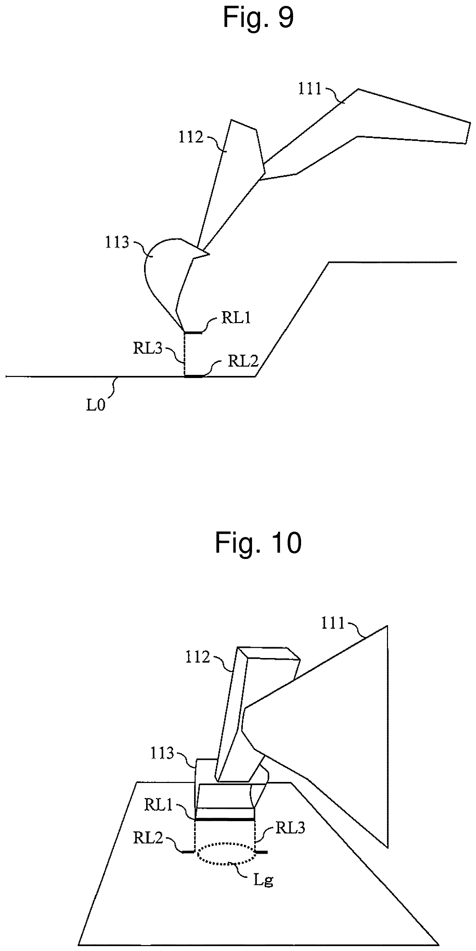

Next, with reference to Fig. 9 and Fig. 10, an example of the AR image displayed in the superimposed image in the first embodiment is described. In the display 304, as illustrated in Fig. 10, for example, a superimposed image generated in the video superimposing section 1035 is displayed including an AR image, together with a synthesized image as illustrated in Fig. 9.

As illustrated in Fig. 9 and Fig. 10, the AR image generation section 1034 (assistance information generation section) generates, as a part of the AR image, assistance information including an assistance figure (first figure) RL1 that highlights the position of a part of the bucket 113 in the area for work, and assistance figures (second figure) RL2 that highlight a part of a second region adjacent to a first region, the first region being a region which includes a portion in which the first figure RL1 is projected in the vertical direction or front-rear direction of the area for work. The video superimposing section 1035 generates an AR image for displaying the assistance information overlaid on the video of the area for work.

For example, the AR image in the first embodiment includes: a line-like figure RL1 (first figure) highlighting the distal end position (claw-tip position) of the bucket 113 during the excavation work of the work machine 100; line-like figures RL2 (second figure) highlighting the position of a ground Lg (corresponding ground Lg (first region)) to which the bucket 113 is about to move; and line-like figures RL3 connecting the above figures. Specifically, the second figures RL2 consist of two figures highlighting portions corresponding to both ends of the first figure RL1 on the surface of the area for work when the first figure RL1 is projected in the vertical direction or the front-rear direction of the area for work. The third figures RL3 are line-like figures extending in the vertical direction or the front-rear direction and respectively connecting the ends of the first figure RL1 and the two figures of the second figures RL2. The corresponding ground Lg is the position directly under the current position of the bucket 113 when the construction machine is a backhoe-type excavator. As will be described later, when the construction machine is a loading excavator, the corresponding ground Lg would be a position in a depth direction (front-rear direction) when viewed from the current position of the bucket 113.

The relationship between the figure RL1 and the figures RL2 is not limited to a specific relationship and may be such that the figure RL1 represents the position of a part of the bucket 113 and the figures RL2 display the position of the corresponding ground Lg so as not to interfere with visual recognition of the corresponding ground Lg. Preferably, however, as illustrated in Fig. 10, the figure RL1 is a straight line extending from the right end to the left end of the blade edge of the bucket 113, and the figures RL2 are straight-line figures sandwiching the corresponding ground Lg from both sides thereof, the corresponding ground Lg being the position to which the blade edge of the bucket 113 is lowered. This display mode is preferable in that the position of the blade edge of the bucket 113 can be clearly visually recognized, and, further, the position of the corresponding ground Lg can also be confirmed without interference to visual recognition thereof.

The shapes of the figures RL1, RL2, and RL3 are not limited to those of the depicted examples, and may take various shapes as long as they are not superimposed over the corresponding ground Lg and visual recognition of the corresponding ground Lg is facilitated. For example, the figures RL1, RL2 may have various shapes other than a straight line, such as a wavy line, a dashed line, a double-line, rectangular, and circular. Further, the color may be changed between the figures RL1, RL2, and RP3. Further, any one of the figures RL1, RL2, and RL3 may be lit all the time while another may blink. Herein, the corresponding ground Lg may be defined in accordance with the function of the work machine 100. If the work machine 100 is a backhoe-type excavator as illustrated in Fig. 1, for example, a current position in the vertical direction (in the present embodiment, the position directly under in the vertical direction) of the bucket 113 in the area for work may be defined as the corresponding ground Lg. That is, the corresponding ground Lg may be defined as one of the positions to which the work machine 100 can reach without performing a rotating operation.

The figure RL1 (first figure) is displayed at the position of the bucket 113 calculated by the bucket position calculation section 1032. The figure RL1 may be displayed superimposed and highlighted over the distal end of the bucket 113 in the superimposed image. The figure RL1 may also be displayed in a region near the distal end of the bucket 113, instead of being displayed overlapping with the distal end of the bucket 113. In this way, visual recognition is possible without interfering with a view of the distal end of the bucket 113.

Meanwhile, the figures RL2 (second figure) are displayed in a region (second region) near the corresponding ground Lg, instead of being displayed overlapping with the ground Lg (corresponding ground (first region)) to which the bucket 113 is about to move. In other words, the figures RL2, by being displayed around the corresponding ground Lg, can indicate the position of the corresponding ground Lg. By avoiding the display of the figures RL2 superimposed over the corresponding ground Lg, and displaying the figures RL2 therearound, the operator of the remote operation section 300 can observe the corresponding ground Lg with clarity on the display 304 while also clearly recognizing the relationship between the bucket 113 and the position of the corresponding ground Lg. Preferably, the figures RL2 are displayed on both sides of the corresponding ground Lg so as to sandwich the corresponding ground Lg. However, this is not a limitation.

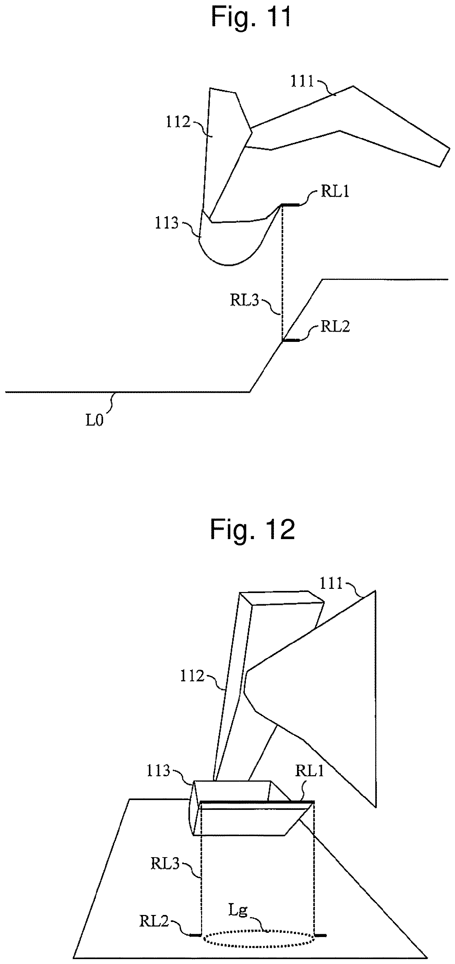

The figures RL3 (third figure) are displayed as line-like figures extending in the vertical direction so as to connect the ends of the figure RL1 and the ends of the figures RL2. When the bucket 113 excavates a horizontal ground, the figures RL1 and RL2 extend in substantially the horizontal direction, whereas the figures RL3 extend substantially along the vertical direction perpendicular thereto. As illustrated in Fig. 11 and Fig. 12, as the position of the bucket 113 moves, the display positions of the figures RL1 to RL3 also change. However, in each case, the figures RL2 are displayed around the corresponding ground Lg to which the bucket 113 is about to move, instead of being displayed overlapping therewith.

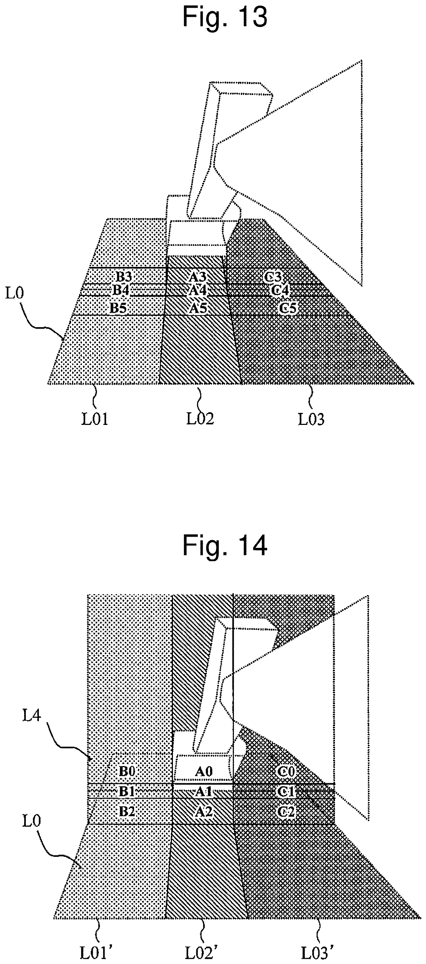

With reference to Fig. 13 and Fig. 14, an example technique for defining the corresponding ground Lg (first region; assistance figure non-display region) is described. When the work machine 100 is a backhoe-type excavator, if the upper rotation body 102 is not rotated and only the boom 111, the arm 112, and the bucket 113 pivot about axes of rotation, the region in which the corresponding ground Lg can be present is determined by a band-like region L02 along planes in which the boom 111, the arm 112, and the bucket 113 pivot. The band region L02 has a width corresponding to the width of the bucket 113, for example, and has a length corresponding to a range in the depth direction (front-rear direction) in which the bucket 113 can pivot.

The AR image generation section 1034 calculates the position of the band region L02, and, because the corresponding ground Lg may be present in the band region L02, causes the figures RL2 to be only displayed in band regions L01 and L03 adjacent to the band region L02 and not in the band region L02. When there is a wall surface L4 rising perpendicularly to the ground L0, as illustrated in Fig. 14, band regions L02', L01', and L03' may be defined along the wall surface L4.

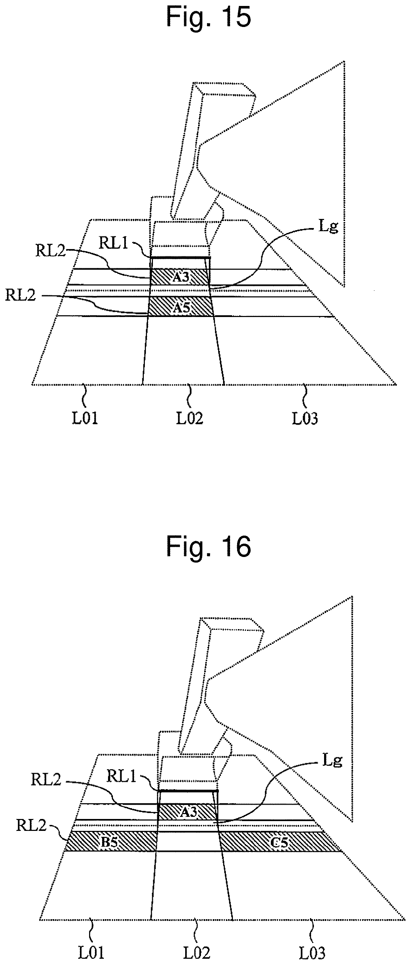

In the example of Fig. 10, the figures RL2 are displayed at the positions horizontally sandwiching the corresponding ground Lg. However, for example, it is possible that, on the basis of the control signal from the operation/display control device 305, the position of the corresponding ground Lg is determined to be limited to a part of the band region L02. In that case, as illustrated in Fig. 15, the figures RL2 may be displayed in regions A3, A5 sandwiching the corresponding ground Lg in the longitudinal direction of the band region L02 (vertical direction). Alternatively, as illustrated in Fig. 16, to explicitly indicate the corresponding ground Lg, the figures RL2 may be displayed in any (for example, the three regions of an upper region A3, a lower-left region B5, and a lower-right region C5) of the regions around the correspond region Lg. In short, display control is performed such that the corresponding ground Lg, i.e., the region the blade edge of the bucket 113 will reach, and the figures RL2 are not displayed overlapping with each other. In other words, the non-display region (first region) for the assistance figures RL2 that is the corresponding ground Lg is, for example, a region that at least includes the position in the vertical direction of the bucket 113 in the area for work, and may be, for example, a part or the entirety of the band-like region (band region L02) having a width corresponding to the width of the bucket 113 and extending in the depth direction. When the non-display region is a part of the band region L02, for example, the non-display region may be a rectangular region (region between the region A3 and the region A5 in the band region L02) having a width corresponding to the width of the bucket 113 and a length corresponding to the length in the depth direction of the bucket 113, or the region (region short of the region A3 in the band region L02) that has a width corresponding to the width of the bucket and is short of the bucket 113.

As described above, according to the first embodiment, the AR image is generated such that the figures RL2 are displayed in a nearby region that does not overlap with the corresponding ground Lg. In this way, it is possible to clearly recognize the position to which the bucket 113 is about to move without interfering with visual recognition thereof.

### [Second embodiment]

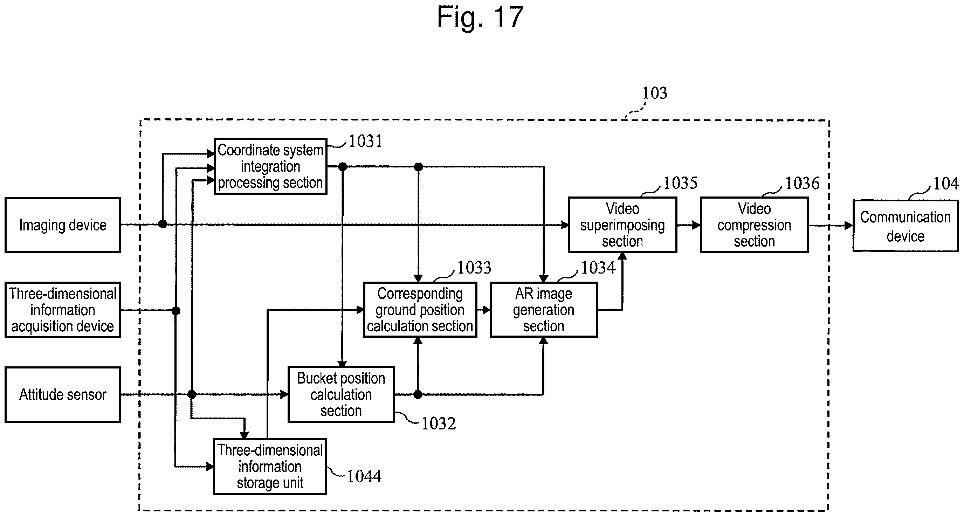

Next, with reference to Fig. 17 to Fig. 21, a display control device according to a second embodiment is described. The overall configuration of the display control device of the second embodiment is similar to the first embodiment, and therefore overlapping description is omitted. The second embodiment differs from the first embodiment in the configuration of the video generation section 103. Specifically, the second embodiment differs from the first embodiment in that a three-dimensional information storage section 1044 for storing the three-dimensional information sensed by the sensors S1 to S3 as the three-dimensional information acquisition device is provided in the video generation section 103.

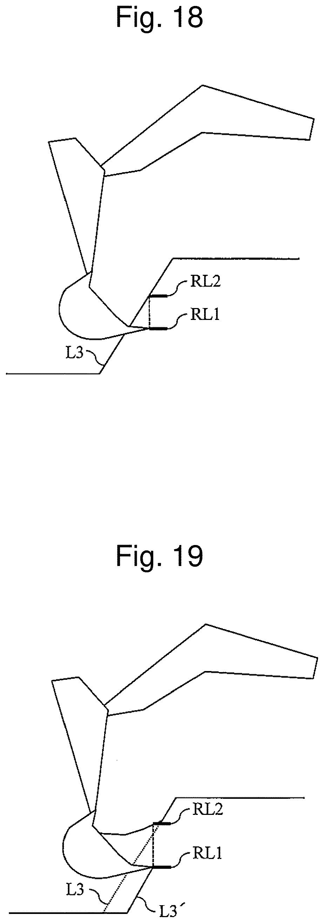

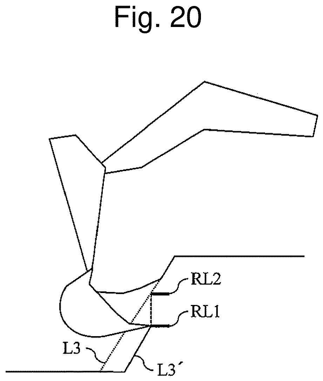

As illustrated in Fig. 18, when the inclined surface L3 is excavated and the blade edge of the bucket 113 is moved to the position of the figures RL2, it is possible that an error is caused in the display position of the figures RL2, as illustrated in Fig. 19, due to the earth that has been excavated and deposited in the bucket 113. In this case, the shape of the inclined surface L3 may be stored in the three-dimensional information storage section 1044 as data in advance, so that the data can be used to correct the position of the figures RL2, as illustrated in Fig. 20.

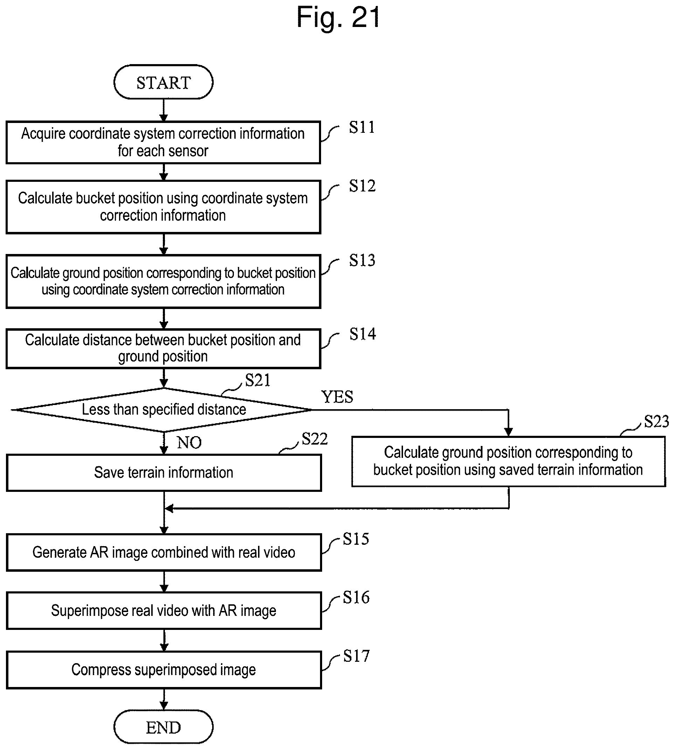

With reference to a flowchart of Fig. 21, a procedure for generating a superimposed image including an AR image in the second embodiment is described. Step S11 to S14 are similar to the first embodiment (Fig. 8). Then, it is determined in step S21 whether the distance between the bucket 113 and the corresponding ground Lg is less than a specified distance. If YES, terrain information stored in the three-dimensional information storage section 1044 is used to calculate the position of the corresponding ground corresponding to the position of the bucket 113. If NO, the obtained information about the position of the bucket 113 and the terrain information in accordance with the position of the corresponding ground Lg are newly stored in the three-dimensional information storage section 1044 (step S22). Thereafter, steps S15 to S17 are performed similarly to the first embodiment.

As described above, according to the second embodiment, it is possible to prevent an error in the figure display position due to the earth excavated and deposited in the bucket 113, making it possible to perform stable work regardless of the shape of the excavated earth.

### [Third embodiment]

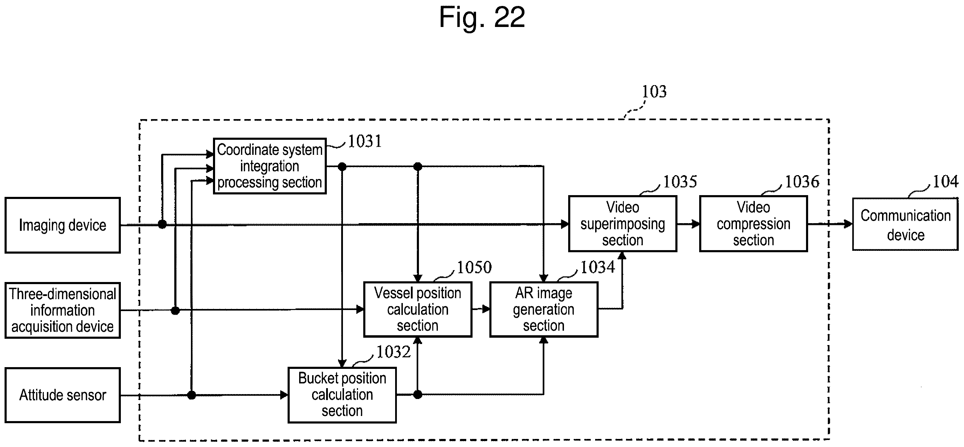

Next, with reference to Fig. 22, a display control device according to a third embodiment is described. The overall configuration of the display control device of the third embodiment is similar to the first embodiment, and therefore overlapping description is omitted. The third embodiment differs from the first embodiment in the configuration of the video generation section 103. Specifically, the video generation section 103 is configured to display an AR image for assisting an operation when the bucket 113 is rotated to move in the direction of the vessel 200. In Fig. 22, the same constituent elements as those of the first embodiment (Fig. 4) are designated with the same reference signs and their overlapping description is omitted. The configuration of Fig. 22 and the configuration of Fig. 4 may be combined and mounted in the single video generation section 103.

The video generation section 103 of Fig. 22 is provided with a vessel position calculation section 1050, in addition to the same constituent elements as those of the first embodiment. The vessel position calculation section 1050 calculates the position (for example, the upper-end portion) of the vessel 200 on the basis of, for example, the data indicating the result of the integration processing in the coordinate system integration processing section 1031, and the position information obtained from the sensors S1 to S3 as the three-dimensional information acquisition device. The AR image generation section 1034 is configured to generate an AR image for sensing the relationship between the position of the vessel 200 and the position of the bucket 113. It is noted that the vessel position calculation section 1050 may sense the position of another object that the bucket 113 may collide when the bucket 113 is rotated, in addition to the position of the vessel. Examples of the other object that may hinder the work include earth deposited in the work range, a vehicle such as a bulldozer, a building, and a worker.

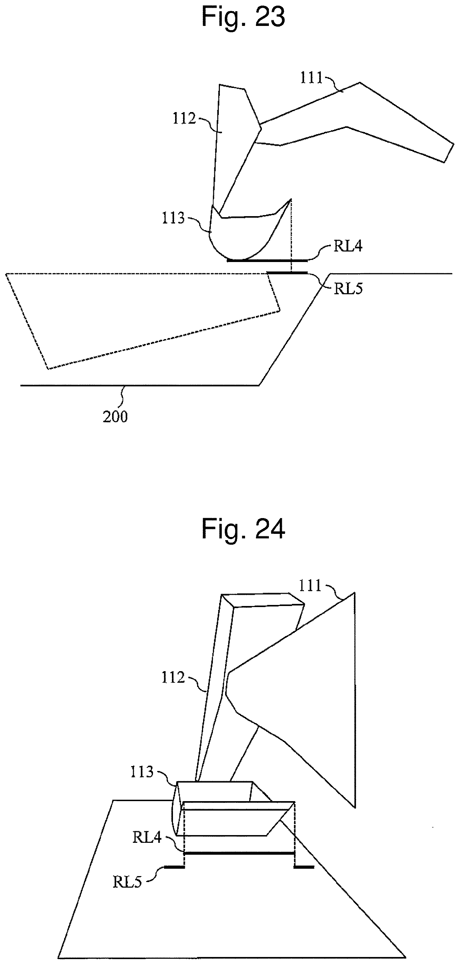

Fig. 23 and Fig. 24 illustrate an example of an AR image displayed in a superimposed image in the display control device of the third embodiment. In the display 304, together with a synthesized image as illustrated in Fig. 23, the superimposed image generated in the video superimposing section 1035 is displayed including the AR image, as illustrated in Fig. 24, for example. As an example, the figure RL4 indicating the position of the lower end of the bucket 113 and the line-like figures RL5 highlighting the position of the upper-end of the vessel 200 can be displayed superimposed as the AR image. That is, in the third embodiment, the AR image generation section 1034, when the vessel 200 is present in the area for work, generates the figures RL5 highlighting the position of at least a part of the vessel 200 as the AR image. Further, when the vessel 200 is present across a first region and the second region, the AR image generation section 1034 sets the upper-end of the vessel 200 portion when the first figure RL1 is projected as a new first region, sets the upper-end portion of the bucket 113 adjacent to the first region thus set as a new second region, and generates a figure highlighting the set second region as the figures RL5.

As described above, the third embodiment facilitates an operation to avoid an event in which, for example, the bucket collides a dump vessel in which earth is loaded, thus making it possible to perform work safely.

### [Variations]

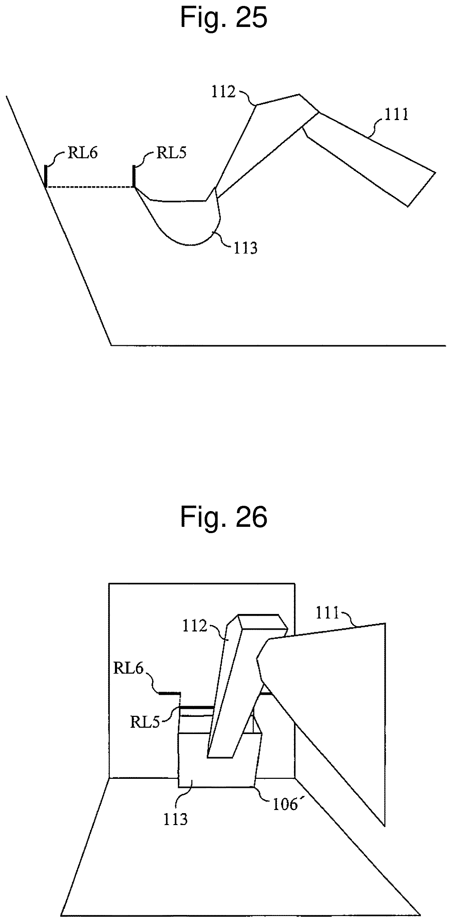

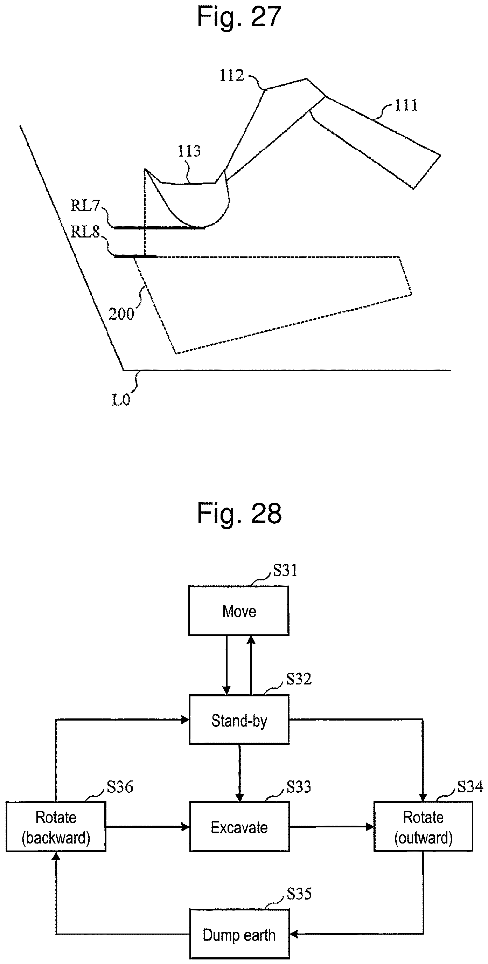

While in the foregoing embodiments, the cases have been described in which the work machine 100 is a so-called backhoe-type excavator, similar configurations may be adopted when the work machine 100 is a loading excavator where the bucket is facing forward. That is, as illustrated in Fig. 25 and Fig. 26, the AR image generation section 1034 (assistance information generation section) can display the line-like figures RL5 highlighting the position of the blade edge of the bucket 113 of the loading excavator, make the region in the front-rear direction (depth direction) of the bucket 113 in the area for work the assistance figure non-display region that is the first region, and display the figures RL6 near the non-display region while avoiding the position of the corresponding ground in which the blade edge of the bucket 113 is expected to move in the front-rear direction in the present embodiment. As illustrated in Fig. 27, when the bucket 113 rotates, an AR image may be displayed indicating a figure RL7 highlighting the position of the lower end of the bucket 113 and a figure RL8 highlighting the position of the upper-end of the vessel 200.

Fig. 28 is a conceptual diagram illustrating switching of the display state of the AR image in the display control device according to the foregoing embodiment. The AR image generation section 1034 (assistance information generation section) may be configured to switch the display mode of the assistance information in accordance with the work state of the work machine 100. More specifically, the work machine 100 moves to the excavation location (S31), stands by (S32), and then drives the bucket 113 to perform excavation (S33). After excavation, the work machine 100 rotates (outward) (S34), and dumping (S35) to the vessel 200 is performed. Once the dumping is finished, the bucket 113 again rotates (backward) (S36) to the excavation location to continue excavation. The display state is switched such that an AR image indicating the positional relationship between the bucket 113 and the corresponding ground Lg is displayed during the step of excavation, and during rotation, an AR image indicating the relationship between the bucket 113 and the position of the vessel 200 is displayed. For the switching of the display state, a setting value may be stored for each user who gets onboard, and the setting value may be read during operation, thus providing an easy-to-operate setting customized for each user. Further, because the captured image may vary in brightness or contrast in accordance with the weather, the time, and the capturing direction (whether forward-lit or back-lit), it is effective to increase visibility by adjusting the brightness or contrast of the displayed superimposed AR image (reducing brightness for superimposed display when the image is dark, such as at night, and increasing brightness to make the superimposed display conspicuous when the image is bright, such as during daytime). Such brightness setting values may also be stored for each user and read during operation.

As described above, the display control device of the present disclosure acquires a video of the area for work of a work machine provided with a bucket and causes the video to be displayed on a display, the display control device including: a three-dimensional information acquisition section that acquires terrain information indicating a three-dimensional shape of the terrain of the area for work; a bucket position calculation section (1032) that acquires attitude information regarding an attitude of the work machine from the work machine to calculate a position of the bucket in the area for work on the basis of the attitude information; and an AR image generation section (1034) that generates an AR image to be overlaid over the video of the area for work and displayed on the display, on the basis of the three-dimensional information and the position of the bucket. The AR image generation section generates, as the AR image, a first figure highlighting the position of at least a part of the bucket, and a second figure highlighting a part of a second region adjacent to a first region, the first region being a region including a portion in which a first figure is projected in a vertical direction or a front-rear direction of the area for work. The AR image generation section (1034), when generating the AR image to be overlaid over the video of the area for work and displayed on the display, generates, as the AR image, a first figure highlighting the position of at least a part of the bucket, and a second figure highlighting a part of a second region adjacent to a first region, the first region being a region including a portion projected in the vertical direction or the front-rear direction of the area for work. In this way, it is possible to provide an appropriate graphical display for work assistance during a series of operations of the work machine, and to improve the work efficiency of the work machine.

The present invention is not limited to the above implementation examples, and includes various variations. The above implementation examples have been described in detail to facilitate an understanding of the present, and are not necessarily limited to those having all of the configurations described. Further, a part of the configuration of a certain implementation example may be replaced with the configuration of another implementation example, and the configuration of another implementation example may be added to the configuration of a certain implementation example. Further, with respect to a part of the configuration of each implementation example, addition, deletion, and/or substitution of another configuration is also possible. Further, the above-described configurations, functions, processing sections, process means and the like may be partly or entirely designed by an integrated circuit, for example, for hardware implementation.

### Reference Signs List

- 100: Work machine (construction machine)
- 101: Lower travel body
- 102: Upper rotation body
- 103: Video generation section
- 104: Communication device
- 107: Antenna
- 111: Boom
- 112: Arm
- 113: Bucket
- 200: Vessel
- 300: Remote operation section
- 301: Driver's seat
- 302: Operation control section
- 303: Input device (operating column)
- 304: Display
- 305: Operation/display control device
- 306: Communication device
- 1031: Coordinate system integration processing section
- 1032, 1032': Bucket position calculation section
- 1033, 1033': Corresponding ground position calculation section
- 1034, 1034': AR image generation section
- 1035: Video superimposing section
- 1036: Video compression section
- 1037: Coordinate system conversion section
- 1039: Three-dimensional information compression section
- 1044: Three-dimensional information storage section
- 1050: Vessel position calculation section
- 3051: Video decompression section
- 3051': Three-dimensional information decompression section
- 3052: Information addition/display switching section,
- 3053: Display control section
- L0, L1, L2: Ground
- L01, L01', L02, L02', L03, L03': Band region
- L4: Wall surface
- Lg: Corresponding ground
- OR: Operation room
- RL1 to 8: Figure
- S1 to S4: Sensor

## Claims

1. A display control device for acquiring a video of an area for work of a work machine provided with a bucket and displaying the video on a display, comprising:
a three-dimensional information acquisition section that acquires terrain information indicating a three-dimensional shape of a terrain of the area for work; a bucket position calculation section that acquires attitude information regarding an attitude of the work machine to calculate a position of the bucket in the area for work on the basis of the attitude information; and
an AR image generation section that generates an AR image to be overlaid over the video of the area for work and displayed on the display on the basis of the terrain information and the position of the bucket,
wherein
the AR image generation section generates, as the AR image, a first figure highlighting the position of at least a part of the bucket, and a second figure highlighting a part of a second region adjacent to a first region, the first region being a region including a portion in which the first figure is projected in a vertical direction or a front-rear direction of the area for work.

2. The display control device according to claim 1, wherein the AR image generation section generates:
as the first figure, a line-like figure highlighting the position of a claw-tip of the bucket; and
as the second figure, two figures highlighting portions corresponding to both ends of the first figure on a surface of the area for work when the first figure is projected in the vertical direction or the front-rear direction of the area for work.

3. The display control device according to claim 2, wherein the AR image generation section generates, as the AR image, a line-like third figure connecting both ends of the first figure and the two figures of the second figure respectively, and extending in the vertical direction or the front-rear direction.

4. The display control device according to claim 1, wherein the AR image generation section generates, as the first figure, a line-like figure indicating the position of a lower end of the bucket.

5. The display control device according to claim 4, further comprising an object position calculation section that acquires detected information about an object present around the work machine to calculate the position of the object on the basis of the detected information,
wherein the AR image generation section, if the object is present in the area for work, generates a fourth figure highlighting the position of at least a part of the object as the AR image.

6. The display control device according to claim 5, wherein the AR image generation section, if the object is present across the first region and the second region, sets an upper-end portion of the object when the first figure is projected as a new first region, sets the upper-end portion of the object adjacent to the set first region as a new second region, and generates a figure highlighting the set second region as the fourth figure.

7. The display control device according to claim 1, wherein the AR image generation section switches a display mode of the AR image in accordance with a work state of the work machine.

8. A remote operation device for the work machine, comprising:
the display control device according to at least one of claims 1 to 7; and
an operation device that includes the display and provided in a position spaced apart from the work machine to operate the work machine while performing communication with the work machine.
